# EUROPÄISCHE PATENTSCHRIFT

(11) **EP 3 959 767 B1**
(45) Veröffentlichungstag und Bekanntmachung des Hinweises auf die Patenterteilung: **21.06.2023**
(21) Anmeldenummer: 20714503.8
(22) Anmeldetag: 20.03.2020
(51) Int. Cl.: H01M 8/04119, B01D 63/08, F24F 6/04

(54) **BEFEUCHTERMODUL, BEFEUCHTER, BRENNSTOFFZELLENSYSTEM MIT EINEM SOLCHEN, SOWIE VERFAHREN ZUR BEFEUCHTUNG EINES GASES**
HUMIDIFIER MODULE, HUMIDIFIER, FUEL CELL SYSTEM HAVING SUCH A HUMIDIFIER, AND METHOD FOR HUMIDIFYING A GAS
MODULE D'HUMIDIFICATION, HUMIDIFICATEUR, SYSTÈME DE PILE À COMBUSTIBLE POURVU D'UN TEL HUMIDIFICATEUR, ET PROCÉDÉ D'HUMIDIFICATION D'UN GAZ

(30) Priorität: 24.04.2019 DE 102019205811
(43) Veröffentlichungstag der Anmeldung: 02.03.2022
(73) Patentinhaber: Audi AG, 85045 Ingolstadt (DE); VOLKSWAGEN AG, 38440 Wolfsburg (DE)
(72) Erfinder: STAECK, Rune, 38518 Gifhorn (DE); WESTPHAL, Tore, 38527 Meine (DE)
(74) Vertreter: Hentrich Patent- & Rechtsanwaltspartnerschaft mbB
(86) Internationale Anmeldenummer: PCT/EP2020/057714
(87) Internationale Veröffentlichungsnummer: WO 2020/216539

(56) Entgegenhaltungen:
- WO-A1-2016/020550
- DE-A1-102014 018 142
- DE-A1-102015 122 144
- DE-A1-102016 224 478

## Beschreibung

Die Erfindung betrifft ein Befeuchtermodul für einen Befeuchter in einem Brennstoffzellensystem mit einer gasdurchlässigen Membran, an deren einer Seite ein ein Flussfeld definierender Flussfeldkern angeordnet ist, wobei der Flussfeldkern mindestens zwei Trennstege aufweist, zwischen denen ein Kanal ausgebildet ist. Darüber hinaus betrifft die Erfindung einen Befeuchter mit einer Mehrzahl von Befeuchtermodulen, ein Brennstoffzellensystem mit einem Befeuchter und ein Verfahren zur Befeuchtung eines Gases in einem Brennstoffzellensystem.

Befeuchter im Allgemeinen werden eingesetzt, um bei zwei gasförmigen Medien mit einem unterschiedlichen Feuchtegehalt eine Übertragung der Feuchte auf das trockenere Medium bewirken zu können. Derartige Gas/GasBefeuchter finden insbesondere Anwendung in Brennstoffzellen-vorrichtungen, bei denen im Kathodenkreislauf zur Versorgung der Katho-denräume des Brennstoffzellenstapels Luft mit dem darin enthaltenen Sau-erstoff verdichtet wird, so dass relativ warme und trockene komprimierte Luft vorliegt, deren Feuchte für die Verwendung in den Brennstoffzellenstapeln für die Membranelektrodeneinheit nicht ausreicht. Die durch den Verdichter bereitgestellte trockene Luft für den Brennstoffzellenstapel wird befeuchtet, indem sie an einer für Wasserdampf durchlässigen Membran vorbeigeführt wird, deren andere Seite mit der feuchten Abluft aus dem Brennstoffzellen-stapel bestrichen wird. In den Kathodenräumen und Anodenräumen fällt darüber hinaus flüssiges Wasser an. Um eine ausreichende Wasserübertragung durch die Befeuchtermembran des Befeuchters bereit zu stellen, müssen Befeuchter vergleichsweise groß ausgebildet sein. Gleichzeitig muss genügend flüssiges Wasser für die Befeuchtung bereitgestellt werden.

Die DE 20 2011 109 654 U1 beschreibt einen Membranbefeuchter für Brennstoffzellen, der einen Rahmen mit integrierten oder eingelegten Flussfeldern aus Kanalstrukturen aufweist, wobei die Oberflächen hydrophil beschichtet sind um Flüssigkeitsansammlungen zu vermeiden und eine gleichmäßige Verteilung der Feuchte auf das zu befeuchtende Gas zu ermöglichen.

Die US 2006/147773 A1 beschreibt einen Befeuchter mit Flussfeldern, die porös und hydrophil ausgestaltet sind und als Einsätze im Rahmen mit randseitiger Abdichtung fixiert sein können.

Die DE 10 2014 205 029 A1 beschreibt wiederum einen Membranbefeuchter mit einem kathodenseitigen Flussfeld, welches einzelne Gasströmungskanäle aufweist, in denen oder an deren Wänden ein poröses Material oder eine Faserstruktur aufgebracht ist zum Aufnehmen einer Flüssigkeit.

Die WO 2016 / 020 550 A1 beschreibt einen Befeuchter, bei dem der Wassertransfer über eine gegebene Fläche der Transfermembran gegenüber bekannten Befeuchtern erhöht ist. Hierbei weisen die Kanäle der Strömungsplatten entlang ihrer Haupterstreckungsrichtung jeweils eine Vielzahl von Leitgeometrien auf, die derart ausgebildet sind, dass sie senkrecht zur Planflächenebene der jeweiligen Strömungsplatte eine Störung einer ideal linearen laminaren Strömung des im Kanal geführten Gases bewirken.

Die DE 10 2014 018 142 A1 beschreibt einen Gas/Gas-Befeuchter mit flachen für Wasserdampf durchlässigen Membranen. Hierbei weist zumindest ein Teil der Strömungskanäle und/oder wenigstens ein Abschnitt eines Teils der Strömungskanäle Einbauten zur Beeinflussung der Strömung des Gases auf. Durch solche Einbauten kann die Strömung des Gases beeinflusst werden, sodass keine laminare Störung mehr vorliegt.

Die DE 10 2016 224 478 A1 beschreibt einen Membranbefeuchter für ein Brennstoffzellensystem.

Die DE 10 2015 122 144 A1 beschreibt einen Befeuchter für ein Brennstoffzellensystem, der sich in der Praxis sehr gut bewährt hat. Er weist eine wasserdampfdurchlässige Membran sowie Abscheiderelemente zum Abscheiden von Wasser (Wasserdampf) auf, wobei die Membran auf einer ersten Seite mit einem ersten Kanal für einen ersten wasserdampfhaltigen und daher feuchten Gasstrom und auf der zweiten Seite mit einem zweiten Kanal für einen zweiten, zu befeuchtenden trockenen Gasstrom in Kontakt steht, wobei eine Vielzahl von separaten Abscheiderelementen auf der ersten Seite der Membran angeordnet ist.

Es ist Aufgabe der vorliegenden Erfindung ein Befeuchtermodul, einen Befeuchter, ein Brennstoffzellensystem und ein Verfahren zur Befeuchtung eines Gases bereitzustellen, bei dem die Baugröße des Befeuchters reduziert werden kann, bei gleichzeitig effektiver Befeuchtung.

Diese Aufgabe wird mit einem Befeuchtermodul mit dem Merkmalsbestand des Anspruchs 1 und durch einen Befeuchter mit dem Merkmalsbestand des Anspruchs 6, sowie durch ein Brennstoffzellensystem mit dem Merkmalsbestand des Anspruchs 7 und durch ein Verfahren mit dem Merkmalsbestand des Anspruchs 9 gelöst. Vorteilhafte Ausgestaltungen mit zweckmäßigen Weiterbildungen der Erfindung sind in den abhängigen Ansprüchen angegeben.

Das Befeuchtermodul zeichnet sich dabei insbesondere dadurch aus, dass die Trennstege aus einem hygroskopischen, nicht wasserlöslichen Material gebildet sind, derart, dass eine in den mindestens einen Kanal strömende Flüssigkeit in den hygroskopischen Trennstegen zeitweise speicherbar ist. Dies ermöglicht somit das Aufnehmen von flüssigem Wasser aus dem Fluidstrom in den hygroskopischen Trennsteg, eine zeitweise Speicherung des so aufgenommenen flüssigen Wassers in dem hygroskopischen Trennsteg und eine Abgabe des flüssigen Wassers durch Verdampfen in den durch den Kanal strömenden Fluid- oder Gasstrom. Somit kann ein üblicherweise diskontinuierlich in den Befeuchter abgegebenes flüssiges Wasser aus dem Gasstrom im Flussfeld zwischengespeichert werden und bei Bedarf wiederum in den Gasstrom, insbesondere in den Kathodenstrom, verdampft und von der Membran aufgenommen werden, um diesen zu befeuchten. Dies ermöglicht, das weniger Wasserübertragung durch die Membran erforderlich ist und somit die Membranfläche des Befeuchters und damit die Baugröße des Befeuchters reduziert werden kann. Darüber hinaus wird der Befeuchter durch die mindestens zwei Trennstege stabilisiert, die die Membran vorzugsweise beidseitig abstützen. Die aus einem hygroskopischen Material gebildeten Trennstege weisen dabei vorzugsweise kapillaraktive Eigenschaften auf, so dass das Flüssigwasser aufgesogen und innerhalb des Trennstegs verteilt wird, so dass das Flüssigwasser innerhalb des Befeuchtermoduls gleichmäßig verteilt wird oder gleichmäßig verteilt vorliegt. Das hygroskopische Material kann beispielsweise eine Silikat, insbesondere Calciumsilikat, oder ein Zeolith sein.

Insbesondere ist es vorteilhaft, wenn der Flussfeldkern von einem hydrophoben Rahmen umgeben ist, oder wenn der Flussfeldkern in eine hydrophobe Trägerplatte aufgenommen ist. Der Rahmen bzw. die Trägerplatte aus einem hydrophoben, also nicht wasserleitenden Material verhindert einen Wassertransport nach außen und dichtet somit das Flussfeld nach außen hin ab. Dabei kann der Flussfeldkern in die hydrophobe Trägerplatte gepresst sein.

Um ein möglichst großes Flussfeld zu erzeugen und um das Befeuchtermodul und damit den Befeuchter möglichst klein gestalten zu können, ist es vorteilhaft, wenn eine Mehrzahl von hygroskopischen Trennstegen voneinander getrennte Kanäle bilden, und wenn die Kanäle sich geradlinig und parallel zueinander erstrecken. Die geradlinige Erstreckung der Kanäle sorgt für einen geringen Druckverlust innerhalb des Befeuchtermoduls. Weiterhin ist durch die Mehrzahl an Trennstegen das Speichervermögen des Flüssigwassers vergrö-ßert und die Abstützung der Membran und damit die Stabilität des Befeuchtermoduls verbessert. Darüber hinaus sorgen die durch die Trennstege gebildete Vielzahl von Kanälen für eine Führung der Fluidströmung und des flüssigen Wassers.

In einer alternativen Ausführungsform ist es vorgesehen, dass eine Mehrzahl von durch hygroskopische Trennstegen gebildete Kanäle vorhanden sind, und dass die Trennstege mindestens eine Umlenkung aufweisen. In anderen Worten können die Trennstege gekrümmt oder abgewinkelt gebildet sein. Insbesondere ist es vorgesehen, dass die Trennstege mehrere Umlenkung aufweisen. Mittels der Umlenkungen bilden die Trennstege Flächen, an denen Wassertropfen abgeschieden werden können. Dies erhöht die Abscheiderate und ermöglicht ein effektiveres Speichern des Flüssigwassers in den hygroskopischen Trennstegen.

In diesem Zusammenhang ist es insbesondere vorgesehen, dass die Trennstege entlang ihrer Erstreckungsrichtung im regelmäßigen Abstand, und bevorzugt parallel zueinander, Umlenkungen aufweisen. Dies erhöht die Abscheidungsrate.

Der erfindungsgemäße Befeuchter zum Befeuchten eines Gases für ein Brennstoffzellensystem mit zwei Endplatten, an denen ein Einlass für trockenes Gas, ein Auslass für befeuchtetes Gas und ein weiterer Anlass für feuchtes Gas und ein weiterer Ausfluss für ein entfeuchtes Gas ausgebildet ist, zeichnet sich insbesondere dadurch aus, das zwischen den Endplatten eine Mehrzahl von den bereits beschriebenen Befeuchtermodulen angeordnet ist. Die für das erfindungsgemäße Befeuchtermodul beschriebenen Vorteile und bevorzugten Ausführungsformen gelten dabei auch für den erfindungsgemä-ßen Befeuchter, der mit einer Mehrzahl von solchen Befeuchtermodulen ausgestattet ist.

Die für den erfindungsgemäßen Befeuchter bzw. dem erfindungsgemäßen Befeuchtermodul beschriebenen Vorteile und bevorzugte Ausführungsformen gelten auch für das erfindungsgemäße Brennstoffzellensystem, welches mit einem solchen ausgestattet ist.

Dabei ist es insbesondere vorteilhaft, wenn anodenseitig ein Abscheider vorhanden ist, wenn ein Abfluss des Abscheiders mit dem Befeuchter fluidmechanisch verbunden ist und/oder wenn kathodenaustrittseitig eine Kathodenabgasleitung mit dem Befeuchter fluidmechanisch verbunden ist. Dies ermöglicht das anodenseitig und/oder kathodenseitig anfallende Flüssigwasser für die Befeuchtung zu verwenden, wodurch die Baugröße des Befeuchters reduziert werden kann.

Das Verfahren zum Befeuchten eines Gases in einem Brennstoffzellensystem mit einem Brennstoffzellenstapel, der mit einem oben beschriebenen Befeuchter fluidverbunden ist, umfasst dabei insbesondere die folgenden Schritte:
- Entnahme von Flüssigwasser aus dem Brennstoffzellenstapel und Zuführen des Flüssigwassers an den Befeuchter,
- Aufnahme zumindest eines Teils des Flüssigwassers in die hygroskopischen Trennstege und Zwischenspeichern des Teils und
- zumindest teilweise Entleeren der hygroskopischen Trennstege durch Verdampfen des Flüssigwassers und Befeuchtung des dem Brennstoffzellenstapel zuzuführen Gases mittels des verdampften Flüssigwassers.

Dies ermöglicht eine effiziente Befeuchtung des Gases, insbesondere des Kathodengases, bei gleichzeitig kleinerer Baugröße des Befeuchters, indem Flüssigwasser in den hygroskopischen Trennstegen zwischengespeichert und bei Bedarf in das Kathodengas verdampft werden kann.

Insbesondere ist es bevorzugt, wenn das Flüssigwasser aus dem Brennstoffzellenstapel anodenseitig und/oder kathodenseitig entnommen wird. Das Flüssigwasser kann dabei durch aktives Ablassen von Flüssigwasser aus dem Brennstoffzellenstapel erfolgen. In einer alternativen Ausführungsform erfolgt das Ablassen von Flüssigwasser aus dem Brennstoffzellenstapel zur Füllung der Trennstege kontinuierlich.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1a: eine schematische Darstellung eines Befeuchtermoduls,
- Fig. 1b: eine Draufsicht des Befeuchtermoduls aus Fig. 1 a mit geradlinig ausgebildeten Trennstegen,
- Fig. 2: eine schematische Darstellung eines weiteren Befeuchtermoduls mit Trennstegen die eine Umlenkung aufweisen und
- Fig. 3: ein Brennstoffzellensystem mit einem eine Mehrzahl von Befeuchtermodulen aufweisenden Befeuchter.

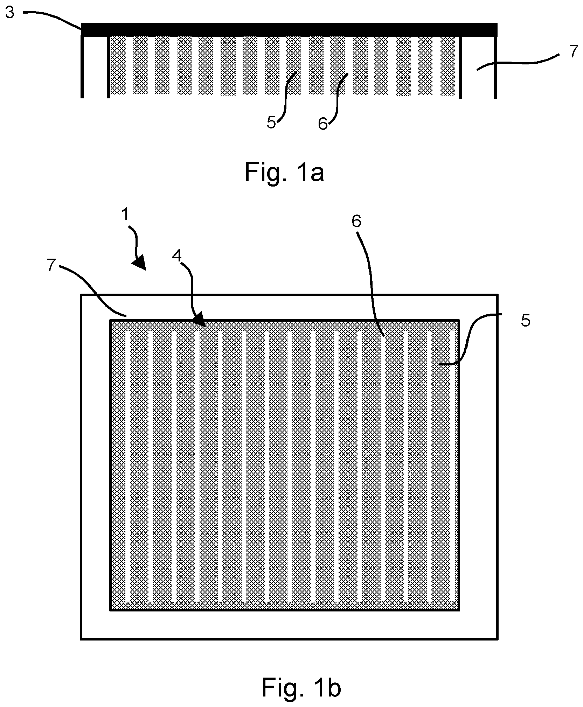

Figur 1a und Figur 1b zeigen ein Befeuchtermodul 1 für einen Befeuchter 15 mit einer gasdurchlässigen Membran 3, an deren einer Seite ein ein Flussfeld definierender Flussfeldkern 4 angeordnet ist. Der Flussfeldkern 4 weist eine Mehrzahl von Trennstegen 5 auf, zwischen den jeweils ein Kanal 6 ausgebildet ist. Die Trennstege 5 sind aus einem hygroskopischen, nicht wasserlöslichen Material, insbesondere aus Calciumsilikat, gebildet, derart, dass einem in den Kanälen 6 strömenden Fluid flüssiges Wasser entnommen, in die hygroskopischen Trennstege 5 aufgenommen, dort zeitweise gespeichert und bei Bedarf mittels Verdampfen aus den Trennstegen 5 abgegeben werden kann.

Figur 1b verdeutlicht dabei, dass der Flussfeldkern 4 von einem hydrophoben Rahmen 7 umgeben ist. Vorliegend ist der Flussfeldkern 4 in eine hydrophobe Trägerplatte gepresst. Durch den hydrophoben Rahmen 7 des Flussfeldkerns 4 wird ein Austreten des flüssigen Wassers aus dem Flussfeldkern 4 nach au-ßen verhindert, der Flussfeldkern 4 also abgedichtet.

Die geradlinige und parallel zueinander ausgebildete Erstreckung der Kanäle 6 ermöglicht dabei ein Führung des darin strömenden Fluids bei einem geringen Druckverlust. Die Trennstege 5 dienen dabei zusätzlich als Stütze für die Membran 3 des Befeuchtermoduls 1 bzw. des Befeuchters 15 und Stabilisieren das Befeuchtermodul 1 oder auch den Befeuchter 15.

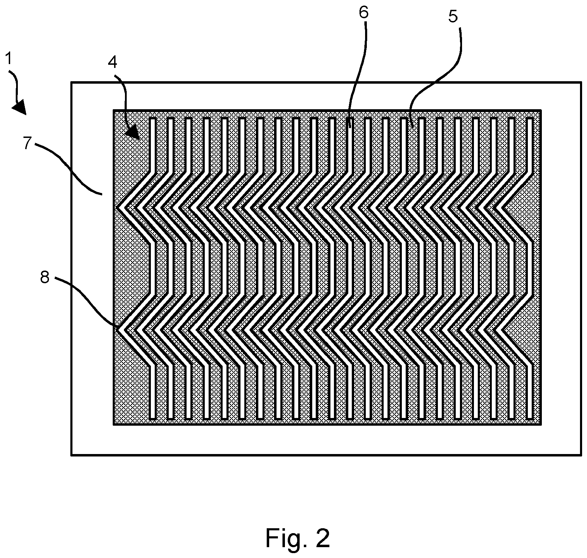

Figur 2 zeigt ein alternatives Ausführungsbeispiel, bei dem die zwischen den hygroskopischen Trennstegen 5 verlaufenden Kanäle 6 mehrere Umlenkungen 8 erfahren. Vorliegend sind entlang der Längserstreckung der Trennstege 5 in regelmäßigem Abstand zueinander Umlenkungen 8 ausgebildet, wobei die einzelnen Trennstege 5 parallel zueinander angeordnet sind. Die Umlenkungen 8 stellen dabei Flächen zur Verfügung, an denen Flüssigkeitstropfen abgeschieden werden können, sodass dem in den Kanälen 6 vorbeiströmenden Fluid, das Flüssigwasser entnommen und in die hygroskopischen Trennstege 5 aufgenommen und darin zwischengespeichert werden kann.

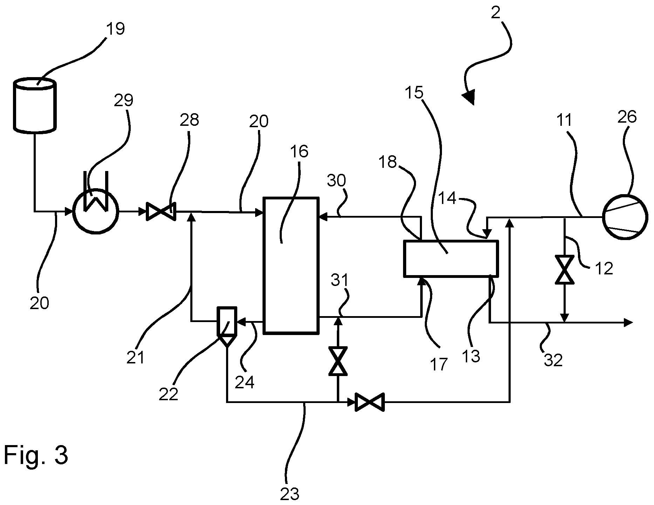

Figur 3 zeigt ein Brennstoffzellensystem 2 mit einem Befeuchter 15 zur Befeuchtung eines Gases. Dabei weist der Befeuchter 15 zwei nicht näher dargestellte Endplatten auf, an denen ein Einlass 14 für trockenes Gas, ein Auslass 18 für befeuchtetes Gas, ein weiterer Einlass 17 für feuchtes Gas und ein weiterer Auslass 13 für entfeuchtetes Gas ausgebildet ist. Zwischen den beiden Endplatten sind eine Mehrzahl von den zuvor beschriebenen Befeuchtermodulen 1 angeordnet.

Das Brennstoffzellensystem 2 umfasst als Kernkomponente einen Brennstoffzellenstapel 16, der eine Vielzahl von in stapelform angeordneten nicht näher dargestellten Brennstoffzellen aufweist. Jeder Brennstoffzelle ist jeweils ein Anodenraum sowie ein Kathodenraum zugeordnet, wobei die Anode und die Kathode durch eine ionenleitfähige Polymerelektrolytmembran voneinander getrennt sind. Zwischen zwei solchen Membranelektrodenan-ordnungen ist ferner jeweils eine nicht näher dargestellte Bipolarplatte angeordnet, welche der Zuführung der Reaktanten in die Anoden- und Kathodenräume dient und ferner die elektrische Verbindung zwischen den einzelnen Brennstoffzellen herstellt.

Um den Brennstoffzellenstapel 2 mit den Reaktanten, also dem Kathodengas und dem Brennstoff zu versorgen, ist der Brennstoffzellenstapel 16 anodenseitig mit einer Anodenzufuhrleitung 20 zur Zuführung eines wasserstoffhaltigen Anodengases aus einem Anodenreservoir 19 verbunden. Der Anodenbetriebsdruck auf der Anodenseite des Brennstoffzellenstapels 16 ist über ein Stellglied 28 in der Anodenzufuhrleitung 20 einstellbar. Anodenaustrittseitig ist eine Anodenabgasleitung 24 vorhanden, die mit einer mit der Anodenzufuhrleitung 20 fluidmechanisch verbundenen Anodenrezirkulationsleitung 21 zum Abtransport von nicht reagierten Anodengas fluidmechanisch verbunden ist. Anodenseitig ist zudem in der Anodenrezirkulationsleitung 21 ein Abscheider 22, insbesondere ein Wasserabscheider vorhanden, dessen Abfluss mittels einer Flüssigkeitszufuhrleitung 23 stromauf vom Befeuchter 15 mit einer Kathodenzufuhrleitung 30 verbunden ist. Dies ermöglicht, das anodenseitig produzierte Flüssigwasser dem Befeuchter 15 zuzuführen.

Kathodenseitig ist der Brennstoffzellenstapel 16 mit einer Kathodenzufuhrleitung 30 verbunden zur Zuführung des sauerstoffhaltigen Kathodengases. Zur Förderung und Verdichtung des Kathodengases ist in einem als Trockenzufuhrleitung 11 ausgebildeten Teil der Kathodenzufuhrleitung 30 ein Verdichter 26 angeordnet. In der dargestellten Ausgestaltung ist der Verdichter 26 als ein hauptsächlich elektromotorisch angetriebener Verdichter 26 ausgestaltet, dessen Antrieb über einen mit einer entsprechenden Leistungselektronik ausgestatteten nicht näher dargestellten Elektromotor erfolgt.

Über den Verdichter 26 wird das Kathodengas, welches aus der Umgebung angesaugt wurde, zu dem Befeuchter 15 mittels der Trockenzufuhrleitung 11 geführt. Ein zweiter Teil der Kathodenzufuhrleitung 30 verbindet den Befeuchter 15 mit dem Brennstoffzellenstapel 16 und leitete befeuchtetes Kathodengas zu den Kathodenräumen des Brennstoffzellenstapels 16. Darüber hinaus wird Flüssigwasser und nicht reagiertes Kathodengas über eine Kathodenabgasleitung 31 zurück zum Befeuchter 15 geleitet, oder das nicht reagierte Kathodengas (insbesondere die Abluft) wird gegebenenfalls aus den Kathodenräumen 18 des Brennstoffzellenstapels 16 zu einer nicht dargestellten Abgasanlage geführt.

Schließlich weist der Befeuchter 15 noch eine Befeuchterabfuhrleitung 32 auf zum Ausleiten von entfeuchtetem Kathodenabgas.

Die Flüssigkeitszufuhrleitung 23 kann weiterhin fluidmechanisch mit der Kathodenabfuhrleitung 31 stromauf des Befeuchters 15 verbunden sein. Dies ermöglicht ebenfalls die Zuführung von Flüssigwasser in den Befeuchter 15, da das Abgas zusätzlich befeuchtet wird, bevor es in den Befeuchter 15 und dessen Befeuchtermodul 1 eintritt. Alternativ oder ergänzend kann stromabwärts des Verdichters 26 eine Bypassleitung 12 vorhanden sein, die mit der Befeuchterabfuhrleitung 32 strömungsmechanisch verbunden ist.

Das Verfahren zum Befeuchten eines Gases in einem Brennstoffzellensystem 2 umfasst dabei insbesondere die folgenden Schritte: Zunächst wird Flüssigwasser aus dem Brennstoffzellenstapel 16 entnommen und dem Befeuchter 15 zugeführt. Das Flüssigwasser entsteht bei der Reaktion der Brennstoffzelle, welches dann in Form des Abgases den Brennstoffzellenstapel 16 verlässt und im Befeuchter 15 genutzt werden kann. Die Flüssigkeitszufuhr kann gegebenenfalls zusätzlich anodenseitig über die verbundene Flüssigkeitszufuhrleitung 23, welche mit der Trockenzufuhrleitung 11 und mit der Kathodenabfuhrleitung 31 strömungsmechanisch verbunden ist, erfolgen. Das Flüssigwasser zusammen mit dem Kathodenabgas strömt dabei durch die Kanäle 6 der Befeuchtermodule 1 des Befeuchters 15 und wird in den hygroskopischen Trennstegen 5 aufgenommen und zwischengespeichert. Die Trennstege 5 können bei Bedarf, insbesondere wenn dem Befeuchter 15 kein weiteres Flüssigwasser zur Verfügung gestellt wird oder bei hohen Lasten, mittels Verdampfen des Flüssigwassers wiederum zumindest teilweise entleert werden, so dass das dem Brennstoffzellenstapel 16 zuzuführende Gas befeuchtet werden kann.

Das teilweise Entleeren kann dabei erfolgen, wenn die Feuchte der Membran 3 einen vorgegebenen oder vorgebbaren Schwellwert unterschreitet. Dieser Schwellwert könnte mittels einer elektrischen Leitfähigkeit des Befeuchters 15 bestimmt werden. Alternativ kann das Flüssigwasser aus den Trennstegen 5 auch in regelmäßigen zeitlichen Zyklen automatisch entleert werden. In einer weiteren alternativen Ausgestaltung werden die Trennstege 5 dann entleert, wenn kein Flüssigwasser von dem Brennstoffzellenstapel 16 zugeführt wird oder zugeführt werden kann, oder das Brennstoffzellensystem 2 in einem Betriebsmodus operiert, in dem ein höherer Wasserbedarf besteht.

### BEZUGSZEICHENLISTE:

- 1.: Befeuchtermodul
- 2.: Brennstoffzellensystem
- 3.: Membran (des Befeuchtermoduls)
- 4.: Flussfeldkern
- 5.: Trennsteg
- 6.: Kanal
- 7.: Rahmen
- 8.: Umlenkung
- 11.: Trockenzufuhrleitung
- 12.: Bypassleitung
- 13.: weiterer Auslass (des Befeuchters)
- 14.: Einlass (des Befeuchters)
- 15.: Befeuchter
- 16.: Brennstoffzellenstapel
- 17.: weiterer Einlass (des Befeuchters)
- 18.: Auslass (des Befeuchters)
- 19.: Anodenreservoir
- 20.: Anodenzufuhrleitung
- 21.: Anodenrezirkulationsleitung
- 22.: Abscheider
- 23.: Flüssigkeitszufuhrleitung
- 24.: Anodenabgasleitung
- 26.: Verdichter
- 28.: Stellglied
- 29.: Wärmeübertrager
- 30.: Kathodenzufuhrleitung
- 31.: Kathodenabgasleitung
- 32.: Befeuchterabfuhrleitung

## Patentansprüche

1. Befeuchtermodul (1) für einen Befeuchter (15) in einem Brennstoffzellensystem (2) mit einer gasdurchlässigen Membran (3), an deren einer Seite ein ein Flussfeld definierender Flussfeldkern (4) angeordnet ist, wobei der Flussfeldkern (4) mindestens zwei Trennstege (5) aufweist, zwischen denen ein Kanal (6) ausgebildet ist, **dadurch gekennzeichnet, dass** die Trennstege (5) aus einem hygroskopischen, nicht wasserlöslichen Material gebildet sind, derart, dass eine in dem mindestens einen Kanal (6) strömende Flüssigkeit in den hygroskopischen Trennstegen (5) zeitweise speicherbar ist.

2. Befeuchtermodul (1) nach Anspruch 1, **dadurch gekennzeichnet, dass** der Flussfeldkern (4) von einem hydrophoben Rahmen (7) umgeben ist oder dass der Flussfeldkern (4) in eine hydrophobe Trägerplatte aufgenommen ist.

3. Befeuchtermodul (1) nach Anspruch 1 oder 2, **dadurch gekennzeichnet, dass** eine Mehrzahl von durch hygroskopische Trennstege (5) voneinander getrennte Kanäle (6) vorhanden sind, und dass die Kanäle (6) sich geradlinig und parallel zueinander erstrecken.

4. Befeuchtermodul (1) nach Anspruch 1 oder 2, **dadurch gekennzeichnet, dass** eine Mehrzahl von durch hygroskopische Trennstege (5) gebildete Kanäle (6) vorhanden sind, und dass die Trennstege (5) mindestens eine Umlenkung (8) aufweisen.

5. Befeuchtermodul (1) nach Anspruch 4, **dadurch gekennzeichnet, dass** die hygroskopischen Trennstege (5) entlang ihrer Längserstreckungsrichtung in regelmäßigem Abstand zueinander Umlenkungen (8) aufweisen.

6. Befeuchter (15) zum Befeuchten eines Gases für ein Brennstoffzellensystem (2) mit zwei Endplatten, an denen ein Einlass (14) für trockenes Gas, ein Auslass (18) für befeuchtetes Gas, ein weiterer Einlass (17) für feuchtes Gas und ein weiterer Auslass (13) für entfeuchtetes Gas ausgebildet ist, sowie mit einer zwischen den Endplatten angeordneten Mehrzahl von Befeuchtermodulen (1) nach einem der Ansprüche 1 bis 5.

7. Brennstoffzellensystem (2) mit einem Brennstoffzellenstapel (16), dem kathodenseitig Kathodengas zuführbar ist und anodenseitig Brennstoff zuführbar ist und mit einem Befeuchter (15) nach Anspruch 6, der kathodenseitig dem Brennstoffzellenstapel (16) vorgeschaltet ist.

8. Brennstoffzellensystem (2) nach Anspruch 7, **dadurch gekennzeichnet, dass** anodenaustrittsseitig ein Abscheider (22) vorhanden ist, dass ein Abfluss des Abscheiders (22) mit dem Befeuchter (15) fluidmechanisch verbunden ist und/oder dass kathodenaustrittsseitig eine Kathodenabgasleitung (31) mit dem Befeuchter (15) fluidmechanisch verbunden ist.

9. Verfahren zur Befeuchtung eines Gases in einem Brennstoffzellensystem (2) mit einem Brennstoffzellenstapel (16), der mit einem Befeuchter (15) nach Anspruch 6 fluidverbunden ist, umfassend die folgenden Schritte:
- Entnahme von Flüssigwasser aus dem Brennstoffzellenstapel (16) und Zuführen des Flüssigwassers an den Befeuchter (15),
- Aufnahme zumindest eines Teils des Flüssigwassers in die hygroskopischen Trennstege (5) und Zwischenspeichern des Teils und
- zumindest teilweises Entleeren der hygroskopischen Trennstege (5) durch Verdampfen des Flüssigwassers und Befeuchten des dem Brennstoffzellenstapel (16) zuzuführenden Gases mittels des verdampften Flüssigwassers.

10. Verfahren nach Anspruch 9, **dadurch gekennzeichnet, dass** das Flüssigwasser aus dem Brennstoffzellenstapel (16) anodenseitig und/oder kathodenseitig entnommen wird.

## Claims

1. A humidifier module (1) for a humidifier (15) in a fuel cell system (2) having a gas-permeable membrane (3), on one side of which a flow field core (4) defining a flow field is arranged, the flow field core (4) having at least two separating webs (5), between which a channel (6) is formed, **characterized in that** the separating webs (5) are formed from a hygroscopic, non-water-soluble material such that a liquid flowing in the at least one channel (6) can temporarily be retained in the hygroscopic separating webs (5).

2. The humidifier module (1) according to claim 1, **characterized in that** the flow field core (4) is surrounded by a hydrophobic frame (7) or that the flow field core (4) is accommodated in a hydrophobic carrier plate.

3. The humidifier module (1) according to claim 1 or 2, **characterized in that** a plurality of channels (6) separated by hygroscopic separating webs (5) is provided, and **in that** the channels (6) extend rectilinearly and parallel to one another.

4. The humidifier module (1) according to claim 1 or 2, **characterized in that** a plurality of channels (6) formed by hygroscopic separating webs (5) is provided, and **in that** the separating webs (5) have at least one deflection (8).

5. The humidifier module (1) according to claim 4, **characterized in that** the hygroscopic separating webs (5) have deflectors (8) at regular intervals from one another along their longitudinal extension direction.

6. A humidifier (15) for humidifying a gas for a fuel cell system (2) with two end plates, at which an inlet (14) for dry gas, an outlet (18) for humidified gas, a further inlet (17) for humidified gas is formed, and with a plurality of humidifier modules (1) according to one of claims 1 to 5 arranged between the end plates

7. A fuel cell system (2) having a fuel cell stack (16) to which cathode gas can be fed on the cathode side and fuel can be fad on the anode side, and having a humidifier (15) according to claim 6, which is connected upstream of the fuel cell stack (16) on the cathode side.

8. The fuel cell system (2) according to claim 7, **characterized in that** a separator (22) is present on the anode outlet side, **in that** an outlet of the separator (22) is fluid-mechanically connected to the humidifier (15), and/or **in that** a cathode outlet line (31) is fluidly connected to humidifier (15).

9. A method for humidifying a gas in a fuel cell system (2) having a fuel cell stack (16) fluidly connected to a humidifier (15) according to claim 6, comprising the following steps:
- Removing liquid water from the fuel cell stack (16) and supplying the liquid water to the humidifier (15),
- Receiving at least a part of the liquid water into the hygroscopic separators (5) and temporarily storing of the part, and
- At least partially emptying the hygroscopic separators (5) by vaporizing the liquid water and humidifying the gas to be fed to the fuel cell stack (16) by means of the vaporized liquid water.

10. The method according to claim 9, **characterized in that** the liquid water is removed from the fuel cell stack (16) on the anode side and/or on the cathode side.

## Revendications

1. Module d'humidificateur (1) pour un humidificateur (15) dans un système de piles à combustible (2) avec une membrane perméable aux gaz (3), sur un côté duquel un noyau de champ d'écoulement (4) définissant un champ d'écoulement est disposé, dans lequel le noyau de champ d'écoulement (4) présente au moins deux nervures de séparation (5), entre lesquels un canal (6) est formé, **caractérisé en ce que** les nervures de séparation (5) sont formées d'un matériau hygroscopique insoluble dans l'eau, qu'un liquide s'écoulant dans l'au moins un canal (6) peut être stocké temporairement dans les nervures de séparation hygroscopiques (5).

2. Module d'humidificateur (1) selon la revendication 1, **caractérisé en ce que** le noyau de champ d'écoulement (4) est entouré d'un cadre hydrophobe (7) ou **en ce que** le noyau de champ d'écoulement (4) est reçu dans une plaque de support hydrophobe.

3. Module d'humidificateur (1) selon la revendication 1 ou 2, **caractérisé en ce qu'**il y a une pluralité de canaux (6) séparés les uns des autres par des nervures de séparation hygroscopiques (5), et **en ce que** les canaux (6) s'étendent en ligne droite et parallèlement les uns aux autres.

4. Module d'humidificateur (1) selon la revendication 1 ou 2, **caractérisé en ce qu'**il y a une pluralité de canaux (6) formés par des nervures de séparation hygroscopiques (5), et **en ce que** les nervures de séparation (5) présentent au moins une déflexion (8).

5. Module d'humidificateur (1) selon la revendication 4, **caractérisé en ce que** les nervures de séparation hygroscopiques (5) présentent des déflexions (8) à distance régulière les unes des autres le long de leur direction d'extension longitudinale.

6. Humidificateur (15) pour humidifier un gaz pour un système de piles à combustible (2) avec deux plaques d'extrémité, sur lesquelles une admission (14) pour du gaz sec, un échappement (18) pour du gaz humidifié, une admission supplémentaire (17) pour du gaz humide et un échappement supplémentaire (13) pour du gaz déshumidifié sont formés, ainsi qu'avec une pluralité de modules d'humidification (1) disposés entre les plaques d'extrémité selon l'une quelconque des revendications 1 à 5.

7. Système de piles à combustible (2) avec un empilement de piles à combustible (16) auquel du gaz cathodique peut être amené côté cathode et du combustible peut être amené côté anode, et avec un humidificateur (15) selon la revendication 6, qui est monté en amont de l'empilement de piles à combustible (16) côté cathode.

8. Système de piles à combustible (2) selon la revendication 7, **caractérisé en ce qu'**il y a un séparateur (22) côté sortie d'anode, **en ce qu'**une sortie du séparateur (22) est connectée mécaniquement par fluide à l'humidificateur (15) et/ou **en ce qu'**une conduite de gaz d'échappement de cathode (31) est connectée mécaniquement par fluide à l'humidificateur (15) côté sortie de cathode.

9. Procédé d'humidification d'un gaz dans un système de piles à combustible (2) avec un empilement de piles à combustible (16) qui est en communication fluidique avec un humidificateur (15) selon la revendication 6, comprenant les étapes suivantes :
- prélèvement d'eau liquide de l'empilement de piles à combustible (16) et alimentation de l'eau liquide à l'humidificateur (15),
- prise d'au moins une partie de l'eau liquide dans les nervures de séparation hygroscopiques (5) et accumulation intermédiaire de la partie et
- vidange au moins partielle des nervures de séparation hygroscopiques (5) par évaporation de l'eau liquide et humidification du gaz à amener à l'empilement de piles à combustible (16) au moyen de l'eau liquide évaporée.

10. Procédé selon la revendication 9, **caractérisé en ce que** l'eau liquide est prélevée de l'empilement de piles à combustible (16) côté anode et/ou côté cathode.
